# EUROPÄISCHE PATENTSCHRIFT

(11) **EP 0 593 892 B1**
(45) Veröffentlichungstag und Bekanntmachung des Hinweises auf die Patenterteilung: **04.09.1996**
(21) Anmeldenummer: 93114624.5
(22) Anmeldetag: 14.10.1993
(51) Int. Cl.: B29C 47/86

(54) **Profilwerkzeug für Extruder**
Profile tool for extruders
Outil de façonnage pour extrudeuses

(30) Priorität: 19.10.1992 DE 4235164
(43) Veröffentlichungstag der Anmeldung: 27.04.1994
(73) Patentinhaber: FRIEDRICH THEYSOHN GmbH, D-32547 Bad Oeynhausen (DE)
(72) Erfinder: Krüger, Ernst, Dr., D-49124 Georgsmarienhütte (DE)
(74) Vertreter: Cohausz & Florack Patentanwälte

(56) Entgegenhaltungen:
- DE-A- 2 257 593
- DE-A- 3 533 349
- DE-A- 4 041 732

## Beschreibung

Die Erfindung bezieht sich auf ein Profilwerkzeug für Extruder mit einzeln ansteuerbaren Temperierelementen.

Bei der Extrusion von Rohren ist es bekannt, die Wanddicke des Rohres durch segmentweise Beheizung von Temperierelementen zu beeinflussen, die außen in der profilgebenden Düse angeordnet sind. Damit lassen sich Wanddickenabweichungen über den Umfang des Rohres korrigieren. Außerdem ist es zur Reduzierung der Aufheizzeit bei großen Werkzeugen bekannt, Heizpatronen im Düsenkern anzuordnen. Diese Heizpatronen dienen außerdem dazu, in der Produktion so viel Wärme zu liefern, daß die Wärmeabstrahlung der Düse kompensiert wird. Hierzu sind auch die Temperiermöglichkeiten für Extruderzylinder nach DE 35 40 024 A1 zu vergleichen.

Bei komplizierten Profilen, zum Beispiel Fensterprofilen, die kleine Stege aufweisen, bereitet die gleichzeitige Einhaltung der Toleranzen in allen Bereichen des Profils Probleme. Problematisch ist vor allem die Einhaltung vorgegebener Toleranzen in Bereichen kleiner Querschnitte. Dies beruht darauf, daß für die kleinen Querschnitte der Werkstoff über einen Nebenkanal, der vom Hauptströmungskanal abzweigt, zugeführt wird. Einflußmöglichkeiten hinsichtlich der Maßhaltigkeit auch in den kleinen Querschnitten können durch Polieren der Oberfläche des beziehungsweise der Nebenkanäle oder über die Geometrie der Kanäle erzielt werden. Es versteht sich, daß dieser Aufwand erheblich ist. Hinzu kommt, daß bei einem Werkstoff- beziehungsweise Rezepturwechsel sich andere rheologische Verhältnisse und damit ein anderes Fließverhalten des Werkstoffes einstellen.

Der Erfindung liegt die Aufgabe zugrunde, ein Profilwerkzeug der eingangs genannten Art zu schaffen, das bei geringem Herstellungsaufwand eine gezielte Zufuhr von Werkstoff zu dem oder den problematischen Bereichen komplizierter Profile gewährleistet.

Diese Aufgabe wird erfindungsgemäß dadurch gelöst, daß die Temperierelemente stromab von der Extruderschnecke und stromauf vom profilgebenden Bereich (Ausgangsteil) des Werkzeuges über den Strömungskanal verteilt derart angeordnet sind, daß die Temperatur des extrudierten Werkstoffes in ausgewählten Zonen des Gesamtquerschnittes verändert werden kann.

Die Erfindung macht von dem an sich bekannten Prinzip Gebrauch, daß durch Temperaturerhöhung beziehungsweise Temperaturverminderung des Werkstoffes die Fließfähigkeit des Werkstoffes im Werkzeug örtlich gezielt beeinflußt werden kann. Dabei wird auf die unmittelbare Beheizung beziehungsweise Kühlung des Werkstoffes an den kritischen Orten des profilgebenden Bereichs des Werkzeuges verzichtet und stattdessen der Werkstoff stromauf gezielt in den Zonen weiter erwärmt, die dann in die kritischen Zonen des profilgebenden Bereichs gelangen. Dies ist wegen der laminaren Strömungsverhältnisse im Werkzeug möglich. Das erfindungsgemäße Profilwerkzeug ist herstellungstechnisch einfach, weil, nicht wie sonst üblich, im profilgebenden Bereich, der für verschiedene Profile auswechselbar ist, die Temperierelemente untergebracht sind, sondern in einem stromauf gelegenen Bereich, der bei einer Profiländerung nicht ausgewechselt zu werden braucht. Herstellungstechnisch einfach ist das erfindungsgemäße Profilwerkzeug im Vergleich zum Stand der Technik auch deshalb, weil für die Flußkorrektur nicht länger eine aufwendige Oberflächenbearbeitung oder andere mechanische Maßnahmen, wie Änderung der Fließkanalgeometrie, notwendig sind.

Die Temperierelemente können stromauf vom profilgebenden Querschnitt an verschiedenen Orten und in verschiedener Form angeordnet sein. Nach einer ersten Ausgestaltung sind die Temperierelemente zwischen der Extruderschnecke und einem dem profilgebenden Bereich (Ausgangsteil) vorgeordneten, den Werkstoffstrom teilenden Bereich (Mittelteil) angeordnet. Dabei können sie sich in Trägerrippen eines im Werkstoffstrom vor dem profilgebenden Bereich (Ausgangsteil) angeordneten Spreizkörpers befinden, sie können aber auch noch weiter stromauf in einem freien Querschnittsbereich als Teile eines Gitters aus sich kreuzenden, einzeln ansteuerbaren Heizstäben angeordnet sein.

Es versteht sich, daß die Erfindung nicht nur für komplizierte Profile, sondern auch für einfache Profile, zum Beispiel Rohre, ihre Vorteile hat, weil für Rohre unterschiedlichen Querschnittes die profilgebenden Bereiche nicht mit Temperierelementen ausgerüstet zu sein brauchen.

Im folgenden wird die Erfindung anhand einer ein Profilwerkzeug für einen Extruder schematisch darstellenden Zeichnung näher erläutert. Im einzelnen zeigen:

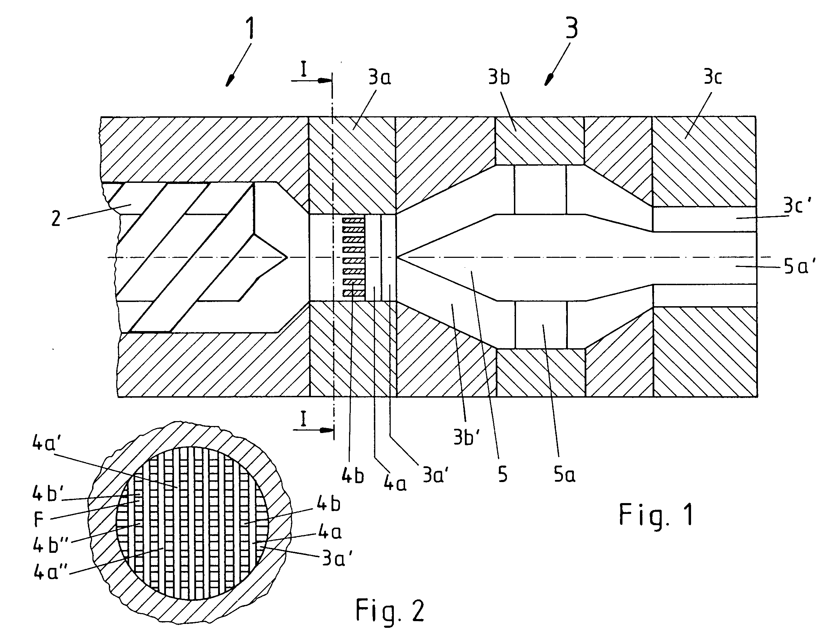

- Figur 1: das an einem Extruder befestigte Werkzeug im Axialschnitt
**und**
- Figur 2: das Werkzeug gemäß Figur 1 im Querschnitt nach der Linie I-I der Figur 1.

An einem Extruder 1 mit Extruderschnecke 2 ist ein Profilwerkzeug 3 befestigt. Das Profilwerkzeug 3 besteht aus einem Eingangsteil 3a, einem Mittelteil 3b und einem Ausgangsteil 3c. Das Ausgangsteil 3c bildet den profilgebenden Bereich.

Das Eingangsteil 3a weist einen zentralen freien Strömungskanal 3a' auf, in dem ein Gitter aus sich kreuzenden Heizstäben 4a,4b angeordnet ist. Die einzelnen Heizstäbe 4a,4b sind einzeln ansteuerbar, so daß aus dem Gesamtquerschnitt einzelne Zonen ausgewählt und besonders beheizt werden können. Werden beispielsweise die Heizstäbe 4a',4a'',4b',4b'' angesteuert, dann wird die Zone F im Vergleich zu allen anderen Zonen stärker aufgeheizt. Der dieser Zone F zugeordnete Strömungspfad behält wegen der laminaren Strömung des Werkstoffes im Profilwerkzeug 3 seine räumliche Zuordnung zu den benachbarten Strömungspfaden bei.

Im Mittelteil 3b ist ein Spreizkörper 5 angeordnet, der von radialen Rippen 5a getragen ist. Stromauf ist er kegelig, in der Mitte zylindrisch und stromab kegelstumpfförmig. Durch diesen Spreizkörper 5 entsteht ein Ringkanal 3b', in dem der Werkstoffstrom geteilt wird. In den Rippen 5a können Temperierelemente untergebracht sein. Im Bereich der Rippen 5a können auch noch kreuzende Rippen vorgesehen sein, so daß sich hier Verhältnisse wie im Eingangsteil 3a ergeben.

Das Ausgangsteil 3c weist einen zylindrischen Kanal 3c' auf, in den zentrisch ein zylindrischer Ansatz 5a' des Spreizkörpers 5 hineinragt. Dieser Ansatz 5a' und das ihn umgebende Ausgangsteil 3c geben dem zu extrudierenden Produkt das Profil. Soll mit dem Extruder ein anderes Profil hergestellt werden, brauchen nur das Ausgangsteil 3c und der Ansatz 5a' ausgewechselt zu werden.

Sofern bei der Vermessung des extrudierten Produktes sich herausstellt, daß zum Beispiel die Wandstärke des mit dem Werkzeug hergestellten Rohres im unteren Bereich zu klein ist, wird durch individuelle Beheizung der Heizstäbe, zwischen den der Werkstoff für diesen unteren Bereich fließt, der Werkstoff weiter aufgeheizt und damit sein Fließverhalten an den Wänden des Werkzeuges mit dem Ergebnis verbessert, daß die Wandstärke des Rohres im unteren Bereich vergrößert wird.

Es versteht sich, daß anstelle der speziellen Ausführung der Drehelemente als Heizstäbe auch andere Temperierelemente, beispielsweise kühlbare Drehelemente, vorgesehen sein können. Diese Temperierelemente können beispielsweise als Rohre ausgebildet sein, die mit einem Kühl- oder Heizmedium beschickt werden können.

## Patentansprüche

1. Profilwerkzeug (3) für Extruder (1) mit einzeln ansteuerbaren Temperierelementen (4a,4b),
**dadurch gekennzeichnet,** daß die Temperierelemente (4a,4b) stromab von der Extruderschnecke (2) und stromauf vom profilgebenden Bereich (Ausgangsteil 3c) des Werkstückes über den Strömungskanal verteilt derart angeordnet sind, daß die Temperatur des extrudierten Werkstoffes in ausgewählten Zonen (F) des Gesamtquerschnittes erhöht werden kann.

2. Profilwerkzeug nach Anspruch 1,
**dadurch gekennzeichnet,** daß die Temperierelemente (4a,4b) zwischen der Extruderschnecke (2) und einem dem profilgebenden Bereich (Ausgangsteil 3c) vorgeordneten, den Werkstoffstrom teilenden Bereich (Mittelteil 3b) angeordnet sind.

3. Profilwerkzeug nach Anspruch 1 oder 2, **dadurch gekennzeichnet,** daß die
Temperierelemente (4a,4b) sich in Trägerrippen (5a) eines im Strömungskanal (3b') vor dem profilgebenden Bereich (Ausgangsteil 3c) angeordneten Spreizkörpers (5) befinden.

4. Profilwerkzeug nach mindestens einem der Ansprüche 1 bis 3,
**dadurch gekennzeichnet,** daß die Temperierelemente (4a,4b) als Teile eines Gitters aus sich kreuzenden, einzeln ansteuerbaren Heizstäben beziehungsweise Kühlstäben ausgebildet sind.

## Claims

1. A profiling tool (3) for extruders (1) having individually operable tempering elements (4a, 4b), characterized in that the tempering elements (4a, 4b) are so disposed distributed over the flow channel downstream of the extruder screw (2) and upstream of the profile-creating zone (output part 3c) of the workpiece that the temperature of the extruded material can be increased in selected zones (F) of the overall cross-section.

2. A profiling tool according to claim 1, characterized in that the tempering elements (4a, 4b) are disposed between the extruder screw (2) and a zone (central part 3b) which is disposed upstream of the profile-creating zone (output part 3c) and divides the flow of material.

3. A profiling tool according to claims 1 or 2, characterized in that the tempering elements (4a, 4b) are disposed in supporting ribs (5a) of an expanding member (3b') disposed upstream of the profile-creating zone (output part 3c).

4. A profiling tool according to at least one of claims 1 to 3, characterized in that the tempering elements (4a, 4b) take the form of parts of a grid of intersecting individually operable heating rods/cooling rods.

## Revendications

1. Outil à profiler (3) pour une extrudeuse (1), comportant des éléments de réglage de température contrôlables (4a, 4b), caractérisé en ce que les éléments de réglage de température (4a, 4b) sont disposés en aval de la vis sans fin (2) de l'extrudeuse et en amont de la zone déterminant te profil (partie de sortie 3c) de la pièce, et sont répartis au-dessus du canal d'écoulement de telle sorte que la température de ta matière extrudée puisse être élevée dans des zones choisies (F) de l'ensemble de la section transversale.

2. Outil à profiler selon la revendication 1, caractérisé en ce que les éléments de réglage de température (4a, 4b) sont disposés entre la vis sans fin (2) de l'extrudeuse et une zone fractionnant le courant de matière (partie médiane 3b), disposée devant la zone déterminant le profil (partie de sortie 3c).

3. Outil à profiter selon la revendication 1 ou 2, caractérisé en ce que les éléments de réglage de température (4a, 4b) sont situés dans des nervures de support (5a) d'un corps d'écartement (5) disposé dans le canal d'écoulement (3b') en amont de la zone déterminant le profit (partie de sortie 3c).

4. Outil à profiler selon au moins l'une des revendications 1 à 3, caractérisé en ce que tes éléments de réglage de température (4a, 4b) sont constitués en tant que parties d'une grille de barres chauffantes croisées et pouvant être commandées, de préférence des barres de refroidissement.
